# EUROPEAN PATENT APPLICATION

(11) **EP 1 764 539 A2**
(43) Date of publication of application: **21.03.2007**
(21) Application number: 06120849.2
(22) Date of filing: 18.09.2006
(51) Int. Cl.: F16L 5/04

(54) **Duct passing through a firewall**

(30) Priority: 19.09.2005 US 230755
(71) Applicant: HONEYWELL INC., Morristown, NJ 07962 (US)
(72) Inventor: Williams, Nicholas A, Phoenix, AZ 85006 (US)
(74) Representative: Haley, Stephen

(57) **Abstract**

A firewall penetration system is provided for use between a firewall (102) and a penetrating member (104). The system comprises a first annular plate (114) with an outer and an inner radial wall (120,122) and an axial wall (124) coupled therebetween, the axial wall (124) extending axially away from the outer radial wall (120), and the inner radial wall (122) extending radially inwardly from the axial wall (124) and having an opening (134) through which the penetrating member (104) may extend. The second annular plate (116) has an outer section (138), an inner section (140), an inner peripheral edge (143) defining an opening (144), the outer section (138) configured to couple to the first annular plate outer radial wall (120), the inner section (140) configured to define a seal cavity (146) with the first annular plate axial wall (124) and inner radial wall when the annular plates (114,116) are coupled together. The compressible seal (118) is configured to be disposed in the seal cavity (146), and has a bulb (148) and a leg (150) extending therefrom.

## Description

The present invention relates to an aircraft firewall and, more particularly, to a feed through system configured to substantially seal one side of the firewall from the other.

Aircraft typically include firewalls that isolate fire zones from non-fire zones, or one fire zone from another fire zone. Each zone includes one or more systems, such as, for example, engine, electrical, pneumatic, and/or hydraulic systems, that cooperate with each other for the operation of the aircraft. Often, the firewall includes openings formed therein that allow system connection equipment, such as ducting, piping and/or wires to extend therethrough to connect the systems to each other. In some cases, gaps may be present between the system connection equipment and firewall, which, in the unlikely event of a fire, may provide a space through which flames may travel. As a result, specialized firewall fittings may need to be included between the equipment and firewall to prevent the flames from traveling from one side of the firewall to the other.

Several types of firewall fittings currently exist. One type of fitting uses a bulkhead connector that has an opening therethrough. The connector is disposed in the firewall opening and the system connection equipment is extended through the bulkhead connector opening. Sealant is injected between the system connection equipment and bulkhead connector to isolate the zones from one another. Another type of fitting uses a fireproof, reinforced silicone rubber boot that can be used to surround structural tubing that extends through the firewall. Still other types of fittings include the use of close tolerance fitting, single purpose penetration ducting or flanged connections at the firewall.

Although the above-mentioned firewall fittings are adequate for preventing flames from traveling through the firewall, they suffer from certain drawbacks. In particular, many of the fittings include a number of components that together are relatively heavy and may undesirably increase aircraft weight. Additionally, some of the fittings may be relatively costly to implement. Moreover, many of the fittings rigidly attach the system connection equipment to the firewall, which may unnecessarily increase the load on the fitting and/or firewall.

Thus, there is a need for a feed through system that is relatively lightweight and inexpensive to implement. Additionally, it is desirable for the system to provide a floating interface between the firewall and system connection equipment.

The present invention provides a kit for a firewall penetration system for use between a firewall and a penetrating member. The kit comprises two annular plates and a compressible seal. The first annular plate has an outer and an inner radial wall and an axial wall coupled therebetween, the axial wall extending axially away from the outer radial wall, and the inner radial wall extending radially inwardly from the axial wall, the inner radial wall having an inner peripheral edge defining an opening through which the penetrating member may extend. The second annular plate has an outer section, an inner section, and an inner peripheral edge, the outer section configured to couple to the first annular plate outer radial wall, the inner section configured to define a seal cavity with the first annular plate axial wall and inner radial wall when the first and second annular plates are coupled together, and the inner peripheral edge defining an opening. The compressible seal is configured to be disposed in the seal cavity, and has a bulb and a leg extending therefrom.

In another embodiment, and by way of example only, a firewall penetration system is provided that is disposed between a firewall and a penetrating member. The system includes two annular plates, a seal cavity, and a compressible seal. The first annular plate has a first section and a second section, each section including an outer radial wall, an inner radial wall and an axial wall coupled therebetween, the axial wall extending axially away from the outer radial wall, the inner radial wall extending radially inwardly from the axial wall, the inner radial wall having an inner peripheral edge defining a first space within which the penetrating member is at least partially disposed. The second annular plate has a first section and a second section, each section including an outer section, an inner section, and an inner peripheral edge, the outer section coupled to the first annular plate outer radial wall, and the inner peripheral edge defining a second space within which the penetrating member is at least partially disposed. The seal cavity is defined by the second annular plate inner section, the first annular plate axial wall, and first annular plate inner radial wall. The compressible seal is disposed in the cavity, and has ends that are joined together such that a ring is formed.

Other independent features and advantages of the preferred system will become apparent from the following detailed description, taken in conjunction with the accompanying drawings which illustrate, by way of example, the principles of the invention.

### In the Drawings;

FIG. 1 is a cross section view of an exemplary feed through system installed between a firewall and duct;

FIG. 2 is a close up view of a section of the feed through system depicted in FIG. 1;

FIG. 3 is the feed through system depicted in FIG. 2 a disassembled state; and

FIG. 4 is the feed through system depicted in FIG. 2 in an assembled state.

The following detailed description of the invention is merely exemplary in nature and is not intended to limit the invention or the application and uses of the invention. Furthermore, there is no intention to be bound by any theory presented in the preceding background of the invention or the following detailed description of the invention.

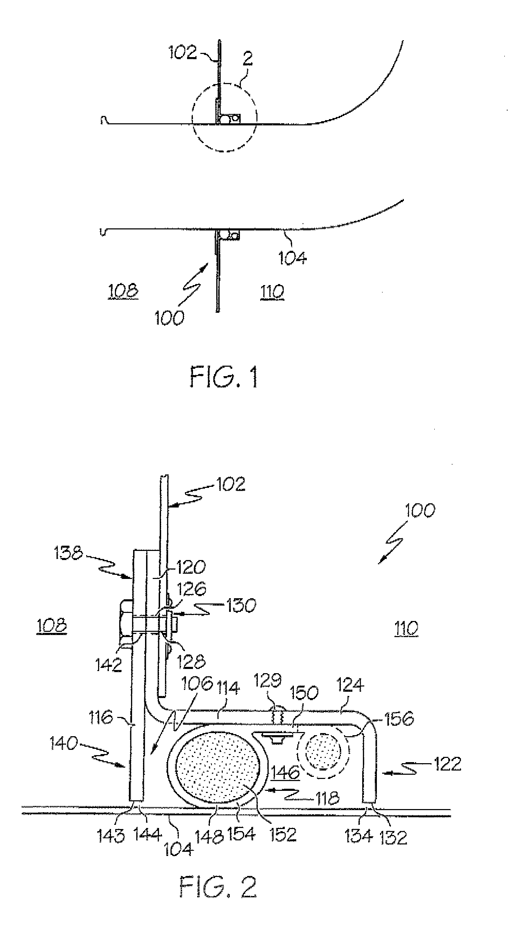

Turning now to FIG. 1, an exemplary feed through system 100 is shown mounted between a firewall 102 and a duct 104. The feed through system 100 allows the duct 104 to extend through an opening 106 in the firewall 102 while minimizing fluid flow communication between a first section 108 on one side of the firewall 102 and a second section 110 on another side of the firewall 102. It will be appreciated that the duct 104 may alternatively be any one of numerous other components that may need to extend through the firewall opening 106, such as, for example, piping, wires, structural tubing, and any other penetrating member. Depicted more clearly in FIG. 2, the opening 106 is sufficiently sized to allow at least a portion of the feed through system 100 to be disposed therein.

FIG. 2 is a close up view of the feed through system 100, which includes a clamshell plate 114, a cover plate 116, and a compressible seal 118. The clamshell plate 114 is configured to provide a space within which the compressible seal 118 may be disposed and to protect the compressible seal 118 from direct flame impingement in the unlikely event of a fire. In this regard, the clamshell plate 114 is constructed of fireproof material, such as, fiber reinforced plastic composite, for example graphite-bismalctmide. Other suitable fireproof materials may alternatively be used.

The clamshell plate 114 is generally annular and includes an outer radial wall 120, an inner radial wall 122, and an axial wall 124 extending therebetween. The outer radial wall 120 includes a plurality of fastener openings 126, one of which is shown in FIG. 2. The fastener openings 126 are disposed in a pattern such that at least selected ones correspond to one or more spaced apart firewall fastener openings 128, and each is configured to receive fasteners 130 for mounting the clamshell plate 114 to the firewall 102. The axial wall 124 extends axially away from the outer radial wall 120 and preferably has a length that is sufficient to accommodate a width of the compressible seal 118. Additionally, the axial wall 124 has an outer diameter that is smaller than the diameter of the firewall opening 106 so that at least a portion of the clamshell plate 114 can extend therethrough. The axial wall 124 may also include one or more openings 129 for mounting the compressible seal 118, as described below. The inner radial wall 122 extends radially inwardly from the axial wall 124. Additionally, the inner radial wall 122 has an inner peripheral edge 132 that defines a duct opening 134. The duct opening 134 is sufficiently sized to allow the duct 104 to extend therethrough.

The cover plate 116 is preferably configured as an annular plate having an outer section 138 and an inner section 140 and is configured to mount the clamshell plate 114 to the firewall 102. Similar to the clamshell plate 114, the cover plate 116 is constructed of fireproof material, for example a fiber reinforced plastic composite such as graphite-bismaleimide. The outer section 138 includes a plurality of fastener openings 142, one of which is shown in FIG. 2. The fastener openings 142 are disposed in a pattern such that at least selected ones correspond to one or more of the clamshell plate and firewall fastener openings 126, 128. In an alternate embodiment, the clamshell plate 114 and cover plate 116 are welded or otherwise coupled together. The inner section 140 of the cover plate 116 has an inner peripheral edge 143 that defines a duct opening 144 that is sized to allow the duct 104 to extend therethrough.

The compressible seal 118 is used to further isolate the first and second sections 108, 110 from each other and is disposed in a seal cavity 146 formed between the clamshell plate 114, the cover plate 116, and the duct 104. Preferably, the compressible seal 118 includes at least one bulb 148 and a leg 150 that extends therefrom. The bulb 148 preferably has a circular cross section and is appropriately sized to indirectly seal gaps formed between the clamshell plate inner peripheral surface 132, cover plate inner peripheral edge 143, and the duct 104 when the feed through system 100 is mounted to the firewall 102.

At least a portion of the bulb 148 is made of a non-flammable material capable of withstanding temperatures over 2000°F without melting. In one exemplary embodiment, the compressible seal 118 includes an inner component 152 and an outer component 154. Preferably, the inner component 152 is capable of operating while exposed to temperatures greater than 2000°F. The outer component 154 is capable of operating while exposed to temperatures lower than 2000°F and to withstand exposure to temperatures above 2000°F. Any one or more suitable materials may be used in the manufacturing of the components 152, 154. For example, the inner component 152 may be a polycrystalline fiber tube and the outer component 154 may be a woven glass fiber fabric wrapped therearound. It will be appreciated that the fiber tube may be configured to provide a desired resiliency.

The leg 150 extends from the bulb 148 and is used to attach the seal 118 to the clamshell plate axial wall 124. In one embodiment, as shown in FIG. 2, the leg 150 is formed from an extension of the outer component 154, and, for example, may be woven glass fiber fabric. The leg 150 is preferably riveted or otherwise secured to the axial wall 124.

In an alternate embodiment, the compressible seal 118 is a dual bulb seal and includes a second bulb 156 (shown in phantom in FIG. 2) that is formed on an end of the leg 150. As shown in FIG. 2, the second bulb 156 may be a pilot bulb that is used to assist in the installation of the compressible seal 118. In such case, the second bulb 156 may be constructed of a different material than the first bulb 148, such as aramid cord and the like. Alternatively, the second bulb 156 may be configured to act as a redundant seal and thus, may be similar in size to the first bulb 148.

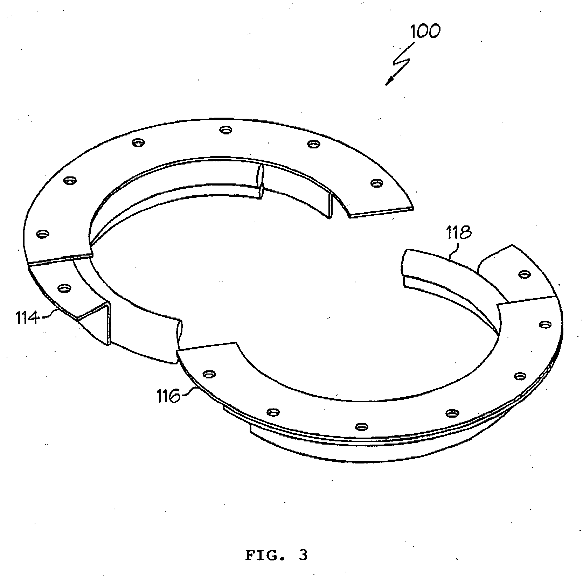

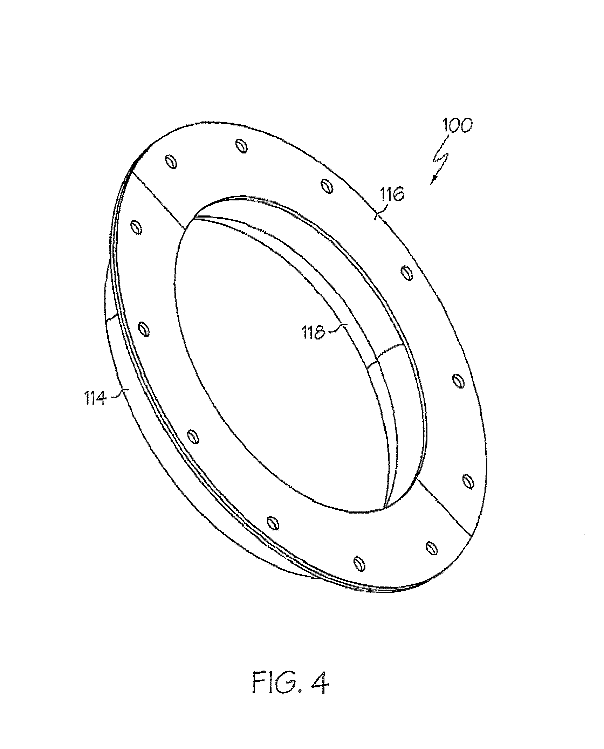

It will be appreciated that each of the components of the system 100 may either be unitary pieces, or alternatively, may comprise multiple pieces for easier mounting to the firewall 102. For example, as shown in FIGs. 3 and 4, the clamshell plate 114, cover plate 116, and compressible seal 118 may each include two or more sections that each form arcs or semicircles. When the system 100 is fully assembled, the sections of the clamshell plate 114 are preferably offset relative to the sections of the cover plate 116, and the sections of the cover plate 116 are preferably offset relative to the sections of the compressible seal 118, as shown in FIG, 3. Consequently, a tortuous path is provided for heat or flames through the firewall 104.

To further minimize the travel of fire through the firewall 104, gaskets may be included between the clamshell plate 114 and cover plate 116 interface and/or between the firewall 102 and the clamshell plate 114 interface. Moreover, ends of each section of the compressible seal 118 may be stitched together, bonded together using a silicone adhesive, or otherwise joined. In one exemplary embodiment, a shape memory material is coupled to the seal 118 that is capable of causing the seal 118 to have a desired predetermined cross-sectional shape, for example, circular or ovular, when exposed to a predetermined temperature.

A feed through system has now been provided that is fireproof and relatively lightweight. Additionally, the system includes few parts and is relatively simple to implement. Moreover, the use of the compressible seal 118 and provision of the gaps defined by the diametrical differences between the inner peripheral edges 143, 132 and the duct 104 provide a floating interface between the firewall 102 and the duct 104.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A kit for a firewall penetration system for use between a firewall (102) and a penetrating member (104), the kit comprising:
a first annular plate (114) having an outer and an inner radial wall (120,122) and an axial wall (124) coupled therebetween, the axial wall (124) extending axially away from the outer radial wall (120), and the inner radial (122) wall extending radially inwardly from the axial wall (124), the inner radial wall (122) having an inner peripheral edge (132) defining an opening (134) through which the penetrating member (104) may extend;
a second annular plate (116) having an outer section (130), an inner section (140), and an inner peripheral edge (143), the outer section(130) configured to couple to the first annular plate outer radial wall (120), the inner section (140) configured to define a seal cavity (146) with the first annular plate axial wall (124) and inner radial wall (122) when the first and second annular plates (114,116) are coupled together, and the inner peripheral edge (143) defining an opening (144); and
a compressible seal (118) configured to be disposed in the seal cavity (146), the compressible seal (118) having a bulb (148) and a leg (150) extending therefrom.

2. The kit of claim 1, wherein the compressible seal (118) is mounted to the first annular plate axial wall (124).

3. The kit of claim 1, wherein the compressible seal (118) is a dual bulb compressible seal.

4. The kit of claim 3, wherein the dual bulb compressible seal (118) includes a pilot bulb (156) and the pilot bulb (156) is configured to be installed adjacent the inner radial wall (122).

5. The kit of claim 1, wherein the compressible seal (118) is integrally formed as an annulus.

6. The kit of claim 1, wherein the compressible seal (118) comprises woven fabric having a first end and a second end stitched together.

7. The kit of claim 1, wherein the compressible seal (118) comprises a strip of woven fabric having a first end and a second end bonded together.

8. The kit of claim 1, wherein the compressible seal (118) includes a shape memory material coupled thereto that is configured to cause the compressible seal to form a predetermined cross-sectional shape upon exposure to a predetermined temperature.

9. The kit of claim 1, wherein at least one of the first and second annular plates (114,116) comprises fireproof material.

10. The kit of claim 9, wherein at least one of the first and second annular plates (114,116) comprises fiber reinforced plastic composite.
